(19) Europäisches Patentamt
European Patent Office
Office européen des brevets

(11) **EP 3 549 336 B1**

(12) **FASCICULE DE BREVET EUROPEEN**

(45) Date de publication et mention
de la délivrance du brevet:
**07.10.2020 Bulletin 2020/41**

(21) Numéro de dépôt: **17816585.8**

(22) Date de dépôt: **30.11.2017**

(51) Int Cl.:
*H04N 5/60* (2006.01)    *H04N 17/04* (2006.01)
*H04N 21/43* (2011.01)    *H04N 21/81* (2011.01)
*H04S 7/00* (2006.01)    *H04N 5/04* (2006.01)

(86) Numéro de dépôt international:
**PCT/EP2017/081043**

(87) Numéro de publication internationale:
**WO 2018/100093 (07.06.2018 Gazette 2018/23)**

(54) **PROCÉDÉ DE SYNCHRONISATION D'UN PREMIER SIGNAL AUDIO ET D'UN DEUXIÈME SIGNAL AUDIO**

VERFAHREN ZUR SYNCHRONISATION EINES ERSTEN AUDIOSIGNALS UND EINES ZWEITEN AUDIOSIGNALS

METHOD FOR SYNCHRONISING A FIRST AUDIO SIGNAL AND A SECOND AUDIO SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2016 FR 1661678**

(43) Date de publication de la demande:
**09.10.2019 Bulletin 2019/41**

(73) Titulaire: **Sagemcom Broadband SAS**
**92500 Rueil-Malmaison (FR)**

(72) Inventeur: **BOURGOIN, Gilles**
**92500 Rueil Malmaison (FR)**

(74) Mandataire: **Lavaud, Thomas et al**
**Cabinet Boettcher**
**16, rue Médéric**
**75017 Paris (FR)**

(56) Documents cités:
**WO-A1-2009/038615    US-A1- 2007 220 561**
**US-A1- 2014 376 873**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

ARRIERE PLAN DE L'INVENTION

Comme les procédés de traitement numérique audio et les procédés de traitement numérique vidéo sont différents et correspondent à des temps de traitement différents, il est nécessaire de synchroniser systématiquement le son et l'image produits par une source audio/vidéo et transmis à un dispositif de restitution audio/vidéo.

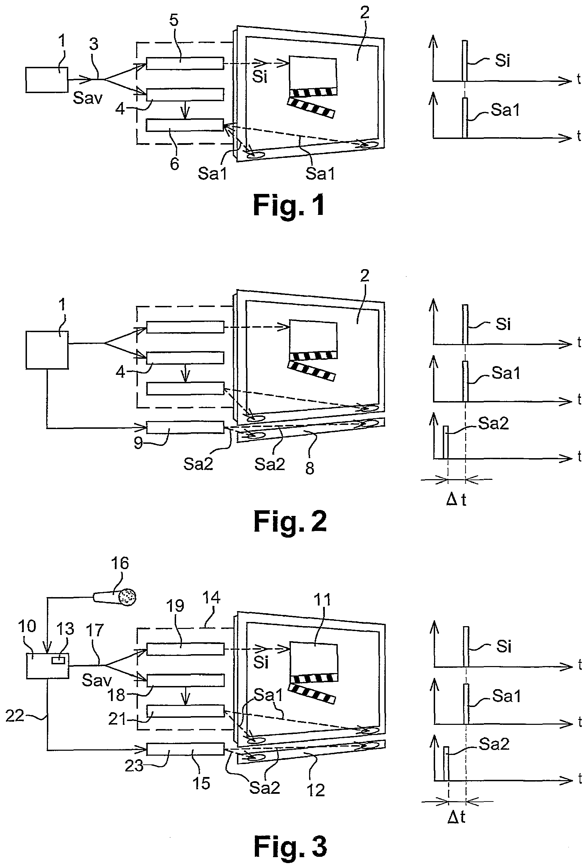

Ainsi, en référence à la figure 1, un signal audio/vidéo d'origine Sav est transmis par un boîtier décodeur 1 (ou *set-top box,* en anglais) à un téléviseur 2, ici via un câble 3 de type HDMI. Le signal audio/vidéo d'origine Sav subit un traitement numérique de décodage audio 4 et un traitement numérique de décodage vidéo 5, qui produisent respectivement un signal audio et un signal image Si. Le signal audio subit en outre, suite au traitement numérique de décodage audio 4, un traitement de synchronisation 6 pour être synchronisé avec le signal image Si. On obtient ainsi un signal audio Sa1. Le signal image Si et le signal audio Sa1 sont alors restitués respectivement par l'écran du téléviseur 2 et par l'enceinte interne du téléviseur 2.

Le réglage du traitement de synchronisation 6 est soit constant et propre au téléviseur 2, soit réglable manuellement « à l'oreille » par l'utilisateur, soit basé sur la mesure d'un retard vidéo qui utilise une source lumineuse et un capteur de lumière.

Cependant, en référence à la figure 2, lorsque l'on utilise une enceinte externe au téléviseur 2, par exemple une barre de son 8, le retard Δt induit par le traitement numérique de décodage audio 9 pour produire le signal audio Sa2 que la barre de son 8 doit restituer n'est pas nécessairement identique au retard induit par le traitement numérique de décodage audio 4 pour produire le signal audio Sa1 que l'enceinte interne du téléviseur 2 doit restituer. Il convient donc de synchroniser ces signaux audio Sa1, Sa2 pour éviter la survenue d'un décalage sonore désagréable.

Le document WO 2009/038615 A1 publié le 26 mars 2009 décrit un procédé permettant la synchronisation de deux signaux audio décalés.

OBJET DE L'INVENTION

Un but de l'invention est de synchroniser efficacement un premier signal audio restitué par un premier dispositif de restitution audio et un deuxième signal audio restitué par un deuxième dispositif de restitution audio, le premier signal audio et le deuxième signal audio étant issus d'un même signal audio d'origine.

RESUME DE L'INVENTION

A cet effet, on propose, selon l'invention, un procédé de synchronisation d'un premier signal audio restitué par un premier dispositif de restitution sonore et d'un deuxième signal audio restitué par un deuxième dispositif de restitution sonore, le premier signal audio et le deuxième signal audio étant issus d'un même signal audio d'origine, le procédé comportant les étapes de :

- mesurer un signal sonore superposé résultant de la restitution du premier signal audio et du deuxième signal audio ;
- réaliser un traitement sur le signal sonore superposé pour obtenir un premier signal traité, le traitement comprenant un calcul d'une fonction d'intercorrélation ou d'autocorrélation ;
- estimer, à partir du premier signal traité, une valeur absolue d'un décalage temporel entre le premier signal audio et le deuxième signal audio ;
- modifier au moins une caractéristique du premier signal audio ou du deuxième signal audio ;
- mesurer à nouveau le signal sonore superposé ;
- réaliser à nouveau le traitement sur le signal sonore superposé pour obtenir un deuxième signal traité ;
- estimer le signe du décalage temporel à partir du deuxième signal traité ;
- synchroniser le premier signal audio et le deuxième signal audio en appliquant au premier signal audio ou au deuxième signal audio un temps de retard ou un temps d'avance correspondant au décalage temporel.

L'utilisation d'une fonction d'intercorrélation ou d'autocorrélation et la prise en compte de l'effet, sur la fonction d'intercorrélation ou d'autocorrélation, d'une modification d'une caractéristique du premier signal audio ou du deuxième signal audio, permettent de synchroniser de manière précise et efficace le premier signal audio et le deuxième signal audio.

On propose aussi un système comprenant une source audio/vidéo, un dispositif de restitution audio/vidéo, un premier dispositif de restitution sonore intégré dans le dispositif de restitution audio/vidéo, un deuxième dispositif de restitution sonore, et des moyens de traitement dans lesquels sont mis en œuvre le procédé de synchronisation tel que précédemment évoqué.

D'autres caractéristiques et avantages de l'invention ressortiront à la lecture de la description qui suit de modes de réalisation particuliers non limitatifs de l'invention.

BREVE DESCRIPTION DES DESSINS

Il sera fait référence aux dessins annexés, parmi lesquels :

- la figure 1 représente un boîtier décodeur, un téléviseur, un signal image et un signal audio ;
- la figure 2 représente un boîtier décodeur, un téléviseur, une barre de son, un signal image, un premier signal audio et un deuxième signal audio ;

- la figure 3 est une figure équivalente à la figure 2, un microphone étant intégré dans le boîtier décodeur ;
- la figure 4 représente des étapes d'un procédé de synchronisation selon un premier mode de réalisation de l'invention ;
- la figure 5 représente une fonction d'intercorrélation obtenue dans la situation de la figure 3 ;
- la figure 6 est une figure équivalente à la figure 3, un gain étant appliqué sur un deuxième signal audio ;
- la figure 7 représente une fonction d'intercorrélation obtenue dans la situation de la figure 6 ;
- la figure 8 est une figure équivalente à la figure 3, dans laquelle le procédé de synchronisation selon le premier mode de réalisation de l'invention est mis en œuvre ;
- la figure 9 est une figure équivalente à la figure 2, un microphone étant intégré dans une télécommande positionnée devant le téléviseur ;
- la figure 10 représente des étapes du procédé de synchronisation selon le deuxième mode de réalisation de l'invention ;
- la figure 11 représente une fonction d'autocorrélation obtenue dans la situation de la figure 9 ;
- la figure 12 est une figure équivalente à la figure 9, un retard prédéterminé étant appliqué au deuxième signal audio ;
- la figure 13 représente une fonction d'autocorrélation obtenue dans la situation de la figure 12 ;
- la figure 14 est une figure équivalente à la figure 9, dans laquelle le procédé de synchronisation selon le deuxième mode de réalisation de l'invention a été mis en œuvre ;
- la figure 15 comporte deux graphiques sur lesquels sont représentées des courbes d'un deuxième signal audio, d'un deuxième signal audio retardé du retard prédéterminé, d'un signal sonore superposé et d'un deuxième signal traité.

DESCRIPTION DETAILLEE DE L'INVENTION

En référence à la figure 3, le procédé de synchronisation selon un premier mode de réalisation est mis en œuvre dans un système comprenant un boîtier décodeur 10, un téléviseur 11 et une barre de son 12 positionnée sous le téléviseur 11.

Le boîtier décodeur 10 comprend des premiers moyens de traitement 13. Le téléviseur 11 comprend des deuxièmes moyens de traitement 14. La barre de son 12 comprend des troisièmes moyens de traitement 15.

Le boîtier décodeur 10 est relié au téléviseur 11 et à la barre de son 12. Le boîtier décodeur 10 produit un signal audio/vidéo d'origine Sav, qui comprend un signal audio d'origine et un signal image d'origine. Un microphone 16 est intégré dans le boîtier décodeur 10.

Le signal audio/vidéo d'origine Sav est transmis par le boîtier décodeur 10 au téléviseur 11 via un câble 17 de type HDMI. Les deuxièmes moyens de traitement 14 du téléviseur 11 mettent en œuvre sur le signal audio/vidéo d'origine Sav un traitement numérique de décodage audio 18 et un traitement numérique de décodage vidéo 19, qui produisent respectivement un signal audio et un signal image Si. Le signal audio subit en outre, suite au traitement numérique de décodage audio 18, un traitement de synchronisation 21 pour être synchronisé avec le signal image Si. On obtient ainsi un premier signal audio Sa1.

Le signal audio d'origine est par ailleurs transmis par le boîtier décodeur 10 à la barre de son 12 via une liaison par fibre optique 22 (une autre liaison pourrait être utilisée, par exemple une liaison filaire quelconque ou une liaison sans fil quelconque). Les troisièmes moyens de traitement 15 mettent en œuvre sur le signal audio d'origine un traitement numérique de décodage audio 23 qui produit un deuxième signal audio Sa2.

L'enceinte du téléviseur 11 restitue ainsi le premier signal audio Sa1, et la barre de son 12 restitue ainsi le deuxième signal audio Sa2, le premier signal audio Sa1 et le deuxième signal audio Sa2 étant tous deux issus d'un même signal audio d'origine inclus dans le signal audio/vidéo d'origine Sav.

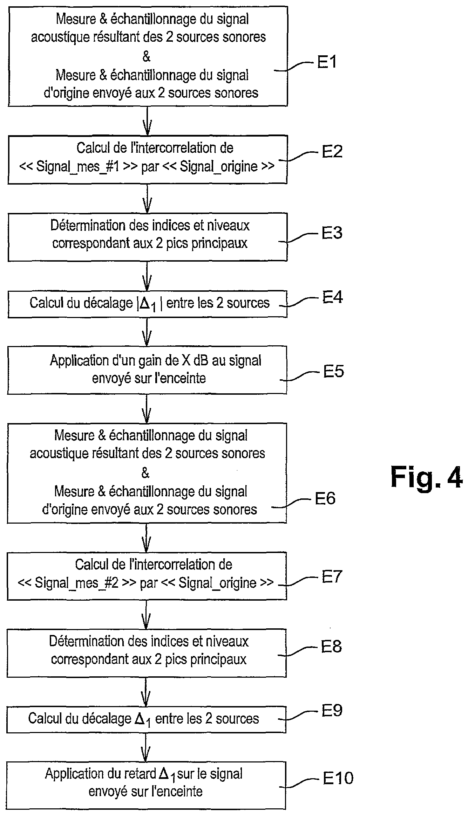

Le microphone 16 du boîtier décodeur 10 acquiert le signal sonore superposé résultant de la restitution du premier signal audio Sa1 et du deuxième signal audio Sa2. Les premiers moyens de traitement 13 du boîtier décodeur 10 mesurent et échantillonnent le signal sonore superposé. Les premiers moyens de traitement 13 du boîtier décodeur 10 mesurent et échantillonnent par ailleurs le signal audio d'origine (étape E1 du procédé de synchronisation selon le premier mode de réalisation de l'invention, visible sur la figure 4).

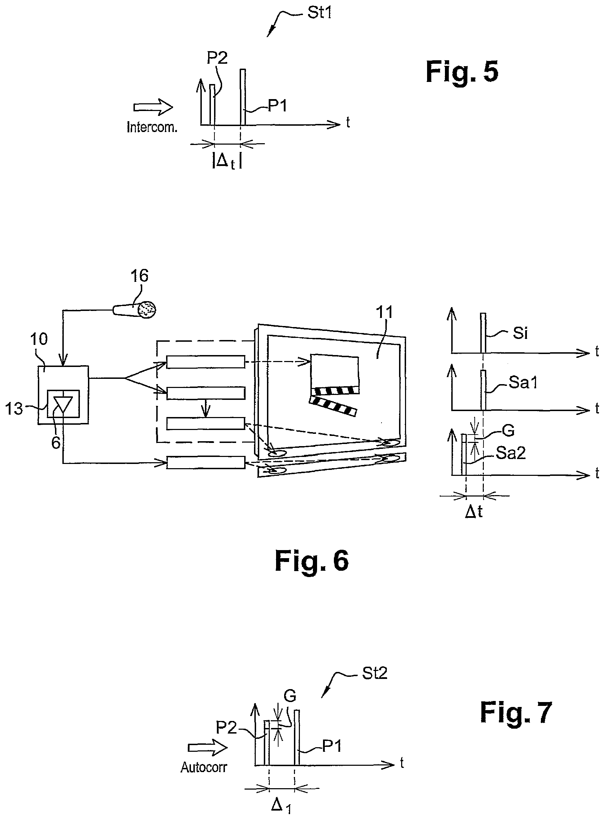

Puis, en référence à la figure 5, les premiers moyens de traitement 13 calculent une fonction d'intercorrélation du signal sonore superposé par le signal audio d'origine (étape E2), et obtiennent un premier signal traité St1.

On rappelle que, de manière générale, la fonction d'intercorrélation du signal x(t) par le signal y(t) est définie par :

$$c_{xy}(\tau) = \int\limits_{-\infty}^{+\infty} x(t)y^*(t-\tau)dt$$

Le premier signal traité St1 comporte deux pics P1, P2. L'un des pics P1 correspond au premier signal audio Sa1, et l'autre des pics P2 correspond au deuxième signal audio Sa2. Les premiers moyens de traitement 13 mesurent alors la position temporelle et l'amplitude de chaque pic P1, P2 (étape E3).

Les premiers moyens de traitement 13 calculent aussi l'écart temporel entre les deux pics P1, P2, qui est égale à la valeur absolue |Δt| du décalage temporel Δt entre le premier signal audio Sa1 et le deuxième signal audio Sa2 (étape E4).

Pour déterminer le signe du décalage temporel et donc pour définir si le premier signal audio Sa1 est en avance sur le deuxième signal audio Sa2, ou bien, au contraire, si le deuxième signal audio Sa2 est en avance sur le premier signal audio Sa1, les premiers moyens de traitement 13 agissent de la manière suivante.

En référence à la figure 6, les premiers moyens de traitement 13 appliquent ponctuellement un gain G à une amplitude du deuxième signal audio Sa2. Le gain G est en l'occurrence appliqué à chaque changement de chaîne, pendant quelques millisecondes (étape E5).

Puis, le microphone 16 du boîtier décodeur 10 acquiert à nouveau le signal sonore superposé résultant de la restitution du premier signal audio Sa1 et du deuxième signal audio Sa2. Les premiers moyens de traitement 13 mesurent et échantillonnent à nouveau le signal sonore superposé. Les premiers moyens de traitement 13 mesurent et échantillonnent par ailleurs à nouveau le signal audio d'origine (étape E6).

En référence à la figure 7, les premiers moyens de traitement 13 calculent à nouveau une fonction d'intercorrélation du signal sonore superposé par le signal audio d'origine, et obtiennent un deuxième signal traité St2 (étape E7).

Les premiers moyens de traitement 13 mesurent alors à nouveau l'amplitude de chaque pic P1, P2 du deuxième signal traité St2 (étape E8).

Parmi l'un des deux pics P1, P2, un pic modifié P2 présente une amplitude qui a été modifiée dans le deuxième signal traité St2 d'une valeur équivalente au gain G par rapport à son amplitude dans le premier signal traité St1. Le pic modifié P2 correspond au deuxième signal audio Sa2, auquel le gain G a été appliqué par les premiers moyens de traitement 13.

Les premiers moyens de traitement 13 estiment ainsi le signe du décalage temporel Δt, et donc le décalage temporel Δt lui-même (étape E9).

Le premier signal audio Sa1 et le deuxième signal audio Sa2 sont alors synchronisés en appliquant au deuxième signal audio Sa2 un temps de retard ou un temps d'avance correspondant au décalage temporel Δt (étape E10).

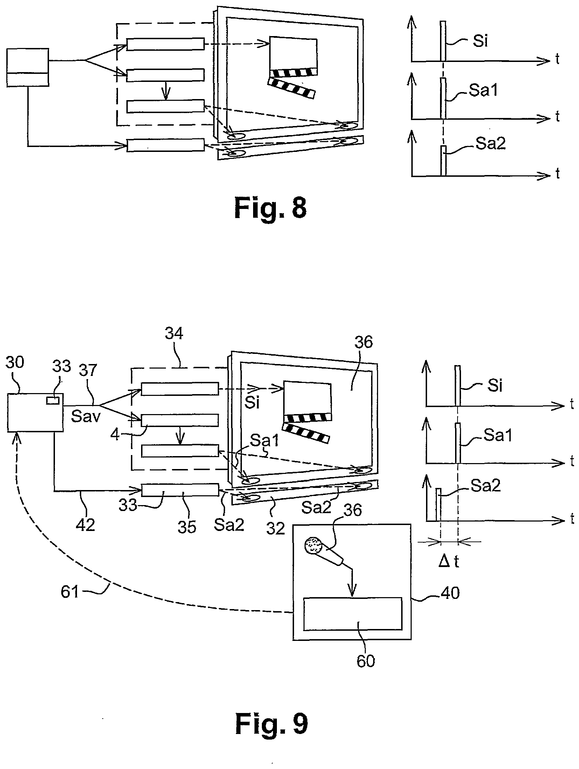

En référence à la figure 9, le procédé de synchronisation selon un deuxième mode de réalisation est mis en œuvre dans un système comprenant un boîtier décodeur 30, un téléviseur 31 et une barre de son 32 positionnée sous le téléviseur 31.

Le boîtier décodeur 30 comprend des premiers moyens de traitement 33. Le téléviseur 31 comprend des deuxièmes moyens de traitement 34. La barre de son 32 comprend des troisièmes moyens de traitement 35.

Le boîtier décodeur 30 est relié au téléviseur 31 et à la barre de son 32. Le boîtier décodeur 30 produit un signal audio/vidéo d'origine Sav, qui comprend un signal audio d'origine et un signal image d'origine.

Un microphone 36 est intégré dans une télécommande 40, qui est ici située devant le téléviseur 31.

La télécommande comporte des quatrièmes moyens de traitement 60.

La télécommande 40 et le boîtier décodeur 30 communiquent entre eux via une liaison sans fil 61.

Le signal audio/vidéo d'origine Sav est transmis par le boîtier décodeur 30 au téléviseur 31 via un câble 37 de type HDMI. Les deuxièmes moyens de traitement 34 du téléviseur 31 mettent en œuvre sur le signal audio/vidéo d'origine Sav un traitement numérique de décodage audio 38 et un traitement numérique de décodage vidéo 39, qui produisent respectivement un signal audio et un signal image Si. Le signal audio subit en outre, suite au traitement numérique de décodage audio 38, un traitement de synchronisation 41 pour être synchronisé avec le signal image Si. On obtient ainsi un premier signal audio Sa1.

Le signal audio d'origine est par ailleurs transmis par le boîtier décodeur 30 à la barre de son 32 via une liaison par fibre optique 42 (une autre liaison pourrait être utilisée, par exemple une liaison filaire quelconque ou une liaison sans fil quelconque). Les troisièmes moyens de traitement 35 mettent en œuvre sur le signal audio d'origine un traitement numérique de décodage audio 43 qui produit un deuxième signal audio Sa2.

L'enceinte du téléviseur 31 restitue ainsi le premier signal audio Sa1, et la barre de son 32 restitue ainsi le deuxième signal audio Sa2, le premier signal audio Sa1 et le deuxième signal audio Sa2 étant tous deux issus d'un même signal audio d'origine compris dans le signal audio/vidéo d'origine Sav.

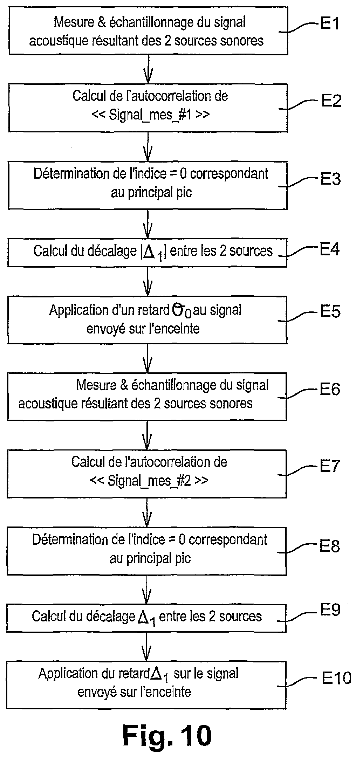

Le microphone 36 de la télécommande 40 acquiert le signal sonore superposé résultant de la restitution du premier signal audio Sa1 et du deuxième signal audio Sa2. Les quatrièmes moyens de traitement 60 de la télécommande 40 mesurent et échantillonnent le signal sonore superposé (étape E1 du procédé de synchronisation selon le premier mode de réalisation de l'invention, visible sur la figure 10).

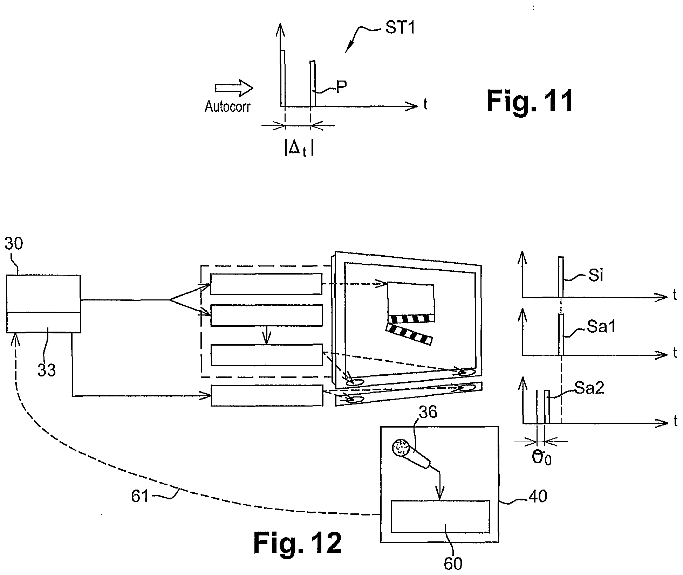

Puis, en référence à la figure 11, les quatrièmes moyens de traitement 60 calculent une fonction d'autocorrélation du signal sonore superposé (étape E2), et obtiennent un premier signal traité St1.

On rappelle que, de manière générale, la fonction d'autocorrélation du signal x(t) est définie par :

$$C_{xx}(\tau) = C_x(\tau) = \int_{-\infty}^{+\infty} x(t)x^*(t-\tau)dt$$

Le premier signal traité St1 comporte un pic P. Les quatrièmes moyens de traitement 60 mesurent alors la position temporelle et l'amplitude du pic P (étape E3).

La valeur absolue de la position temporelle du pic P est égale à la valeur absolue |Δt| du décalage temporel Δt entre le premier signal audio Sa1 et le deuxième signal audio Sa2 (étape E4).

Pour déterminer le signe du décalage temporel Δt et donc pour définir si le premier signal audio Sa1 est en avance sur le deuxième signal audio Sa2, ou bien, au contraire, si le deuxième signal audio Sa2 est en avance sur le premier signal audio Sa1, les quatrièmes moyens de traitement 60 et les premiers moyens de traitement 33 du boîtier décodeur 30 agissent de la manière suivante.

En référence à la figure 12, les premiers moyens de traitement 13 appliquent ponctuellement un retard prédéterminé $\theta_0$ au deuxième signal audio Sa2. Le retard prédéterminé $\theta_0$ est en l'occurrence appliqué à chaque changement de chaîne, pendant quelques millisecondes (étape E5).

Puis, le microphone 36 de la télécommande 40 acquiert à nouveau le signal sonore superposé résultant de la restitution du premier signal audio Sa1 et du deuxième signal audio Sa2. Les quatrièmes moyens de traitement 60 mesurent et échantillonnent à nouveau le signal sonore superposé (étape E6).

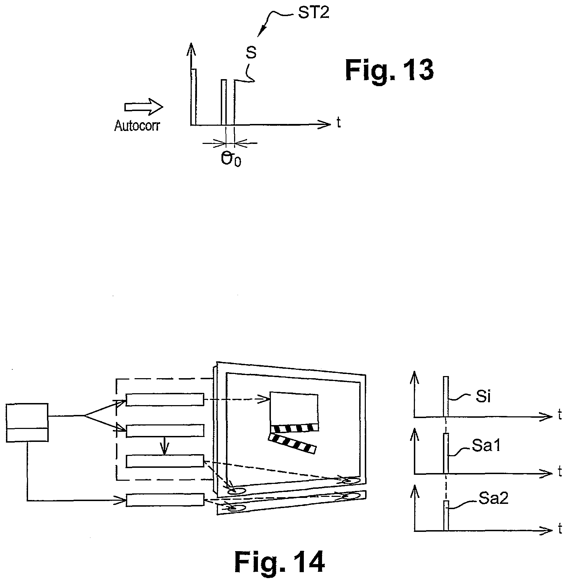

En référence à la figure 13, les quatrième moyens de traitement 60 calculent à nouveau une fonction d'autocorrélation du signal sonore superposé (étape E7), et obtiennent un deuxième signal traité St2.

Les quatrièmes moyens de traitement 60 mesurent alors à nouveau la position temporelle du pic P (étape E8). Un signe du décalage temporel est obtenu en déterminant un sens de déplacement S du pic P dans le deuxième signal traité St2 par rapport au premier signal traité St1.

Les quatrièmes moyens de traitement 60 estiment ainsi le signe du décalage temporel $\Delta t$, et donc le décalage temporel $\Delta t$ lui-même (étape E9).

Les quatrièmes moyens de traitement 60 transmettent alors la valeur du décalage temporel $\Delta t$ aux premiers moyens de traitement 33 du boîtier décodeur 30 via la liaison sans fil 61.

Le premier signal audio Sa1 et le deuxième signal audio Sa2 sont alors synchronisés en appliquant au deuxième signal audio Sa2 un temps de retard ou un temps d'avance correspondant au décalage temporel $\Delta t$.

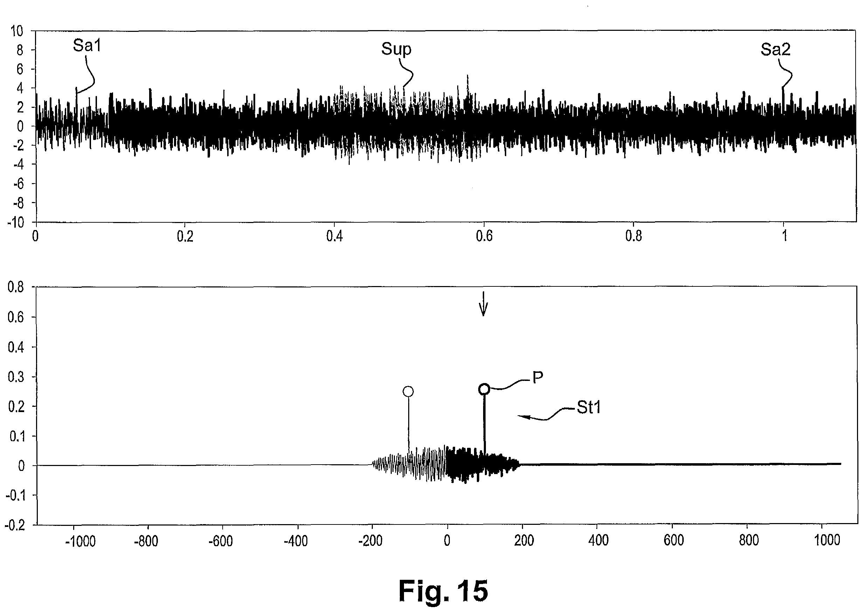

La figure 15, sur laquelle sont représentées des courbes obtenues par simulation, illustre la mise en œuvre du procédé de synchronisation selon le deuxième mode de réalisation de l'invention.

On distingue sur la figure 15 le premier signal audio Sa1, le deuxième signal audio Sa2, le signal sonore superposé Sup, et le premier signal traité St1 obtenu par la fonction d'autocorrélation. On voit que le deuxième signal audio Sa2 présente un décalage temporel de 100ms par rapport au premier signal audio Sa1. On voit aussi que la position temporelle du pic P, égale à 100ms, correspond bien au décalage temporel.

Bien entendu, l'invention n'est pas limitée aux modes de réalisation décrits mais englobe toute variante entrant dans le champ de l'invention telle que définie par les revendications.

On a ici évoqué des premiers, deuxièmes et troisièmes moyens de traitement pour le premier mode de réalisation du procédé de synchronisation selon l'invention, et des premiers, deuxièmes, troisièmes et quatrièmes moyens de traitement pour le deuxième mode de réalisation du procédé de synchronisation selon l'invention. On note que ces moyens de traitement peuvent être positionnés différemment, par exemple dans un ou plusieurs boîtiers additionnels reliés par des liaisons quelconques au boîtier décodeur et/ou au téléviseur et/ou à la barre de son et/ou à la télécommande.

Dans les deux modes de réalisation, le microphone pourrait être positionné différemment (par exemple, dans le boîtier décodeur dans le cas du deuxième mode de réalisation).

Bien que le gain et le retard prédéterminé soient ici appliqués au deuxième signal audio, le gain et/ou le retard prédéterminé peuvent être appliqués au premier signal audio.

On précise que par « gain », on entend un gain positif ou négatif, et que par « retard prédéterminé », on entend un décalage temporel prédéterminé positif ou négatif (c'est-à-dire un temps d'avance prédéterminé ou un temps de retard prédéterminé).

## Revendications

1. Procédé de synchronisation d'un premier signal audio (Sa1) restitué par un premier dispositif de restitution sonore (11 ; 31) et d'un deuxième signal audio (Sa2) restitué par un deuxième dispositif de restitution sonore (12 ; 32), le premier signal audio et le deuxième signal audio étant issus d'un même signal audio d'origine, le procédé comportant les étapes de :

   - mesurer un signal sonore superposé (Sup) résultant de la restitution du premier signal audio et du deuxième signal audio ;
   - réaliser un traitement sur le signal sonore superposé pour obtenir un premier signal traité (St1), le traitement comprenant un calcul d'une fonction d'intercorrélation ou d'autocorrélation ;
   - estimer, à partir du premier signal traité, une valeur absolue d'un décalage temporel ($\Delta t$) entre le premier signal audio et le deuxième signal audio ;
   - modifier au moins une caractéristique du premier signal audio ou du deuxième signal audio ;
   - mesurer à nouveau le signal sonore superposé ;
   - réaliser à nouveau le traitement sur le signal sonore superposé pour obtenir un deuxième signal traité (St2) ;
   - estimer le signe du décalage temporel à partir du deuxième signal traité ;
   - synchroniser le premier signal audio et le deuxième signal audio en appliquant au premier signal audio ou au deuxième signal audio un temps de retard ou un temps d'avance correspondant au décalage temporel.

2. Procédé de synchronisation selon la revendication 1, dans lequel le premier dispositif de restitution sonore est intégré dans un dispositif de restitution audio/vidéo, et dans lequel le signal audio d'origine est inclus dans un signal audio/vidéo d'origine produit par une source audio/vidéo reliée au dispositif de restitution audio/vidéo et au deuxième dispositif de restitution sonore.

3. Procédé de synchronisation selon la revendication 1, dans lequel le traitement consiste à calculer une fonction d'intercorrélation entre le signal sonore superposé et le signal sonore d'origine, et dans lequel la valeur absolue du décalage temporel ($\Delta$t) est obtenue à partir d'un écart temporel entre deux pics (P1, P2) du premier signal traité.

4. Procédé de synchronisation selon la revendication 3, dans lequel la modification d'au moins une caractéristique du premier signal audio ou du deuxième signal audio consiste à appliquer ponctuellement un gain (G) à une amplitude du premier signal audio ou du deuxième signal audio.

5. Procédé de synchronisation selon la revendication 4, dans lequel un signe du décalage temporel est obtenu en identifiant, parmi les deux pics du premier signal traité, un pic modifié (P2) dont l'amplitude a été modifiée dans le deuxième signal traité d'une valeur équivalente au gain par rapport à son amplitude dans le premier signal traité.

6. Procédé de synchronisation selon la revendication 1, dans lequel le traitement consiste à calculer une fonction d'autocorrélation du signal sonore superposé, et dans lequel la valeur absolue du décalage temporel ($\Delta$t) est obtenue à partir de la position d'un pic du premier signal traité.

7. Procédé de synchronisation selon la revendication 6, dans lequel la modification d'au moins une caractéristique du premier signal audio ou du deuxième signal audio consiste à appliquer ponctuellement un retard prédéterminé ($\theta_0$) au premier signal audio ou au deuxième signal audio.

8. Procédé de synchronisation selon la revendication 7, dans lequel un signe du décalage temporel est obtenu en déterminant un sens de déplacement du pic dans le deuxième signal traité par rapport au premier signal traité.

9. Système comprenant une source audio/vidéo (10 ; 30), un dispositif de restitution audio/vidéo (11 ; 31), un premier dispositif de restitution sonore intégré dans le dispositif de restitution audio/vidéo, un deuxième dispositif de restitution sonore (12 ; 32), et des moyens de traitement dans lesquels est mis en œuvre le procédé de synchronisation selon l'une des revendications précédentes.

10. Système selon la revendication 9, dans lequel la source audio/vidéo est un boîtier décodeur, le dispositif de restitution audio/vidéo est un téléviseur, et le deuxième dispositif de restitution sonore est une enceinte externe telle qu'une barre de son.

11. Boîtier décodeur comprenant un microphone, des moyens de connexion à un premier dispositif de restitution sonore et à un deuxième dispositif de restitution sonore, et des moyens de traitement dans lesquels est mis en œuvre le procédé de synchronisation selon l'une des revendications 1 à 8.

12. Programme d'ordinateur comprenant des instructions pour mettre en œuvre, par un boîtier décodeur, le procédé de synchronisation selon l'une des revendications 1 à 8.

13. Moyens de stockage, **caractérisés en ce qu'**ils stockent un programme d'ordinateur comprenant des instructions pour mettre en œuvre, par un boîtier décodeur, le procédé de synchronisation selon l'une des revendications 1 à 8.

**Patentansprüche**

1. Verfahren zur Synchronisation eines ersten Audiosignals (Sa1), das von einer ersten Tonwiedergabevorrichtung (11; 31) wiedergegeben wird, und eines zweiten Audiosignals (Sa2), das von einer zweiten Tonwiedergabevorrichtung (12; 32) wiedergegeben wird, wobei das erste Audiosignal und das zweite Audiosignal von einem selben Ursprungs-Audiosignal abstammen, wobei das Verfahren die Schritte umfasst:

- Messen eines überlagerten Tonsignals (Sup), das aus der Wiedergabe des ersten Audiosignals und des zweiten Audiosignals resultiert;
- Durchführen einer Verarbeitung an dem überlagerten Tonsignal, um ein erstes verarbeitetes Signal (St1) zu erhalten, wobei die Verarbeitung eine Berechnung einer Interkorrelations- oder Autokorrelationsfunktion umfasst;
- Schätzen anhand des ersten verarbeiteten Signals eines Absolutwertes einer zeitlichen Verschiebung ($\Delta$t) zwischen dem ersten Audiosignal und dem zweiten Audiosignal;
- Modifizieren mindestens einer Charakteristik des ersten Audiosignals oder des zweiten Audiosignals;
- erneutes Messen des überlagerten Tonsignals;
- erneutes Durchführen der Verarbeitung an dem überlagerten Tonsignal, um ein zweites verarbeitetes Signal (St2) zu erhalten;
- Schätzen des Vorzeichens der zeitlichen Verschiebung anhand des zweiten verarbeiteten Signals;
- Synchronisieren des ersten Audiosignals und des zweiten Audiosignals durch Anwenden einer Verzögerungszeit oder einer Vorlaufzeit, die der zeitlichen Verschiebung entspricht, an dem ersten Audiosignal oder an dem zweiten Audiosignal.

2. Synchronisationsverfahren nach Anspruch 1, bei dem die erste Tonwiedergabevorrichtung in eine Audio/Video-Wiedergabevorrichtung integriert ist, und bei dem das Ursprungs-Audiosignal in einem Ursprungs-Audio/Video-Signal enthalten ist, das von einer Audio/Video-Quelle erzeugt wird, die mit der Audio/Video-Wiedergabevorrichtung und mit der zweiten Tonwiedergabevorrichtung verbunden ist.

3. Synchronisationsverfahren nach Anspruch 1, bei dem die Verarbeitung darin besteht, eine Interkorrelationsfunktion zwischen dem überlagerten Tonsignal und dem Ursprungs-Tonsignal zu berechnen, und bei dem der Absolutwert der zeitlichen Verschiebung ($\Delta t$) anhand eines zeitlichen Abstands zwischen zwei Peaks (P1, P2) des ersten verarbeiteten Signals erhalten wird.

4. Synchronisationsverfahren nach Anspruch 3, bei dem die Modifikation mindestens einer Charakteristik des ersten Audiosignals oder des zweiten Audiosignals darin besteht, punktuell eine Verstärkung (G) an einer Amplitude des ersten Audiosignals oder des zweiten Audiosignals anzuwenden.

5. Synchronisationsverfahren nach Anspruch 4, bei dem ein Vorzeichen der zeitlichen Verschiebung dadurch erhalten wird, dass unter den beiden Peaks des ersten verarbeiteten Signals ein modifizierter Peak (P2) identifiziert wird, dessen Amplitude in dem zweiten verarbeiteten Signal um einen Wert modifiziert worden ist, der gleich der Verstärkung in Bezug auf seine Amplitude in dem ersten verarbeiteten Signal ist.

6. Synchronisationsverfahren nach Anspruch 1, bei dem die Verarbeitung darin besteht, eine Autokorrelationsfunktion des überlagerten Tonsignals zu berechnen, und bei dem der Absolutwert der zeitlichen Verschiebung ($\Delta t$) anhand der Position eines Peaks des ersten verarbeiteten Signals erhalten wird.

7. Synchronisationsverfahren nach Anspruch 6, bei dem die Modifikation mindestens einer Charakteristik des ersten Audiosignals oder des zweiten Audiosignals darin besteht, dass eine vorbestimmte Verzögerung ($\theta_0$) punktuell am ersten Audiosignal oder am zweiten Audiosignal anzuwenden.

8. Synchronisationsverfahren nach Anspruch 7, bei dem ein Vorzeichen der zeitlichen Verschiebung dadurch erhalten wird, dass eine Bewegungsrichtung des Peaks in dem zweiten verarbeiteten Signal in Bezug auf das erste verarbeitete Signal bestimmt wird.

9. System, umfassend eine Audio/Video-Quelle (10; 30), eine Audio/Video-Wiedergabevorrichtung (11; 31), eine erste Tonwiedergabevorrichtung, die in die Audio/Video-Wiedergabevorrichtung integriert ist, eine zweite Tonwiedergabevorrichtung (12; 32) und Verarbeitungsmittel, in denen das Synchronisationsverfahren nach einem der vorhergehenden Ansprüche durchgeführt wird.

10. System nach Anspruch 9, bei dem die Audio/Video-Quelle ein Decoder-Gehäuse ist, die Audio/Video-Wiedergabevorrichtung ein Fernseher ist und die zweite Tonwiedergabevorrichtung ein externer Lautsprecher, wie z. B. eine Soundbar, ist.

11. Decoder-Gehäuse, umfassend ein Mikrophon, Verbindungsmittel zur Verbindung mit einer ersten Tonwiedergabevorrichtung und einer zweiten Tonwiedergabevorrichtung und Verarbeitungsmittel, in denen das Synchronisationsverfahren nach einem der Ansprüche 1 bis 8 durchgeführt wird.

12. Computerprogramm, umfassend Anweisungen zum Durchführen des Synchronisationsverfahrens nach einem der Ansprüche 1 bis 8 durch ein Decoder-Gehäuse.

13. Speichermittel, die **dadurch gekennzeichnet sind, dass** sie ein Computerprogramm speichern, das Anweisungen umfasst, um das Synchronisationsverfahren nach einem der Ansprüche 1 bis 8 durch ein Decoder-Gehäuse durchzuführen.

## Claims

1. A synchronization method for synchronizing a first audio signal (Sa1) played back by a first sound playback device (11; 31) with a second audio signal (Sa2) played back by a second sound playback device (12; 32), the first audio signal and the second audio signal being derived from a single original audio signal, the method comprising the steps of:

   - measuring a superposed audio signal (Sup) resulting from playing back the first audio signal and the second audio signal;
- processing the superposed audio signal in order to obtain a first processed signal (St1), the processing comprising calculating a cross-correlation function or an auto-correlation function;
- from the first processed signal, estimating an absolute value for a time shift ($\Delta t$) between the first audio signal and the second audio signal;
- modifying at least one characteristic of the first audio signal or of the second audio signal;
- measuring the superposed sound signal once more;
- performing processing once more on the superposed sound signal in order to obtain a second processed signal (St2) ;
- estimating the sign of the time shift from the second processed signal;
- synchronizing the first audio signal and the second audio signal by applying to the first audio signal or to the second audio signal a delay time or an advance time corresponding to the time shift.

2. A synchronization method according to claim 1, wherein the first sound playback device is integrated in an audio/video playback device, and wherein the original audio signal is included in an original audio/video signal produced by an audio/video source connected to the audio/video playback device and to the second sound playback device.

3. A synchronization method according to claim 1, wherein the processing consists in calculating a cross-correlation function between the superposed sound signal and the original sound signal, and wherein the absolute value of the time shift ($\Delta t$) is obtained from a time difference between two peaks (P1, P2) of the first processed signal.

4. A synchronization method according to claim 3, wherein the modification to at least one characteristic of the first audio signal or of the second audio signal consists in applying temporarily a gain (G) to the amplitude of the first audio signal or of the second audio signal.

5. A synchronization method according to claim 4, wherein the sign of the time shift is obtained by identifying among the two peaks of the first processed signal, a modified peak (P2) of amplitude that has been modified in the second processed signal by a value equivalent to the gain compared with its amplitude in the first processed signal.

6. A synchronization method according to claim 1, wherein the processing consists in calculating an auto-correlation function of the superposed sound signal, and wherein the absolute value of the time shift

($\Delta t$) is obtained from the position of a peak in the first treated signal.

7. A synchronization method according to claim 6, wherein the modification of at least one characteristic of the first audio signal or the second audio signal consists in applying temporarily a predetermined delay ($\theta_0$) to the first audio signal or to the second audio signal.

8. A synchronization method according to claim 7, wherein a sign of the time shift is obtained by determining the direction of the shift of the peak in the second processed signal relative to the first processed signal.

9. A system comprising an audio/video source (10; 30), an audio/video playback device (11; 31), a first sound playback device integrated in the audio/video playback device, a second sound playback device (12; 32), and processor means that perform the synchronization method according to any preceding claim.

10. A system according to claim 9, wherein the audio/video source is a decoder unit, the audio/video playback device is a TV set, and the second sound playback device is an external loudspeaker, such as a sound bar.

11. A decoder unit including a microphone, connection means for connecting to a first sound playback device and to a second sound playback device, and processor means that perform the synchronization method according to any one of claims 1 to 8.

12. A computer program including instructions enabling a decoder unit to perform the synchronization method according to any one of claims 1 to 8.

13. Storage means, **characterized in that** they store a computer program including instructions enabling a decoder unit to perform the synchronization method according to any one of claims 1 to 8.

**Fig. 1**

**Fig. 2**

**Fig. 3**

```
┌─────────────────────────────────────────┐
│   Mesure & échantillonnage du signal     │
│  acoustique résultant des 2 sources sonores │
│                    &                     │     ── E1
│   Mesure & échantillonnage du signal     │
│  d'origine envoyé aux 2 sources sonores  │
└─────────────────────────────────────────┘
                    │
                    ▼
┌─────────────────────────────────────────┐
│       Calcul de l'intercorrelation de    │
│  << Signal_mes_#1 >> par << Signal_origine >> │   ── E2
└─────────────────────────────────────────┘
                    │
                    ▼
┌─────────────────────────────────────────┐
│     Détermination des indices et niveaux │
│      correspondant aux 2 pics principaux │     ── E3
└─────────────────────────────────────────┘
                    │
                    ▼
┌─────────────────────────────────────────┐
│  Calcul du décalage |Δ₁| entre les 2 sources │   ── E4
└─────────────────────────────────────────┘
                    │
                    ▼
┌─────────────────────────────────────────┐
│       Application d'un gain de X dB au signal │
│             envoyé sur l'enceinte        │     ── E5
└─────────────────────────────────────────┘
                    │
                    ▼
┌─────────────────────────────────────────┐
│   Mesure & échantillonnage du signal     │
│  acoustique résultant des 2 sources sonores │
│                    &                     │     ── E6
│   Mesure & échantillonnage du signal     │
│  d'origine envoyé aux 2 sources sonores  │
└─────────────────────────────────────────┘
                    │
                    ▼
┌─────────────────────────────────────────┐
│       Calcul de l'intercorrelation de    │
│  << Signal_mes_#2 >> par << Signal_origine >> │   ── E7
└─────────────────────────────────────────┘
                    │
                    ▼
┌─────────────────────────────────────────┐
│     Détermination des indices et niveaux │
│      correspondant aux 2 pics principaux │     ── E8
└─────────────────────────────────────────┘
                    │
                    ▼
┌─────────────────────────────────────────┐
│  Calcul du décalage Δ₁ entre les 2 sources │    ── E9
└─────────────────────────────────────────┘
                    │
                    ▼
┌─────────────────────────────────────────┐
│     Application du retard Δ₁ sur le signal │
│             envoyé sur l'enceinte        │     ── E10
└─────────────────────────────────────────┘
```

**Fig. 4**

St1

P2

P1

Intercom.

|Δt|

**Fig. 5**

16

10

11

13

6

Si

Sa1

G

Sa2

Δt

**Fig. 6**

St2

G

P2

P1

Autocorr

Δ1

**Fig. 7**

**Fig. 8**

**Fig. 9**

Mesure & échantillonnage du signal acoustique résultant des 2 sources sonores — E1

Calcul de l'autocorrelation de << Signal_mes_#1 >> — E2

Détermination de l'indice = 0 correspondant au principal pic — E3

Calcul du décalage $|\Delta_1|$ entre les 2 sources — E4

Application d'un retard $\Theta_0$ au signal envoyé sur l'enceinte — E5

Mesure & échantillonnage du signal acoustique résultant des 2 sources sonores — E6

Calcul de l'autocorrelation de << Signal_mes_#2 >> — E7

Détermination de l'indice = 0 correspondant au principal pic — E8

Calcul du décalage $\Delta_1$ entre les 2 sources — E9

Application du retard $\Delta_1$ sur le signal envoyé sur l'enceinte — E10

# Fig. 10

**Fig. 11**

ST1

Autocorr

P

$|\Delta_t|$

t

**Fig. 12**

Si

Sa1

Sa2

$\theta_0$

t

t

t

30

33

36

40

60

61

Fig. 13

Fig. 14

Fig. 15

**EP 3 549 336 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 2009038615 A1